# EUROPÄISCHE PATENTSCHRIFT

(11) **EP 1 934 517 B1**
(45) Veröffentlichungstag und Bekanntmachung des Hinweises auf die Patenterteilung: **10.09.2014**
(21) Anmeldenummer: 06807197.6
(22) Anmeldetag: 12.10.2006
(51) Int. Cl.: B60Q 1/00, B60Q 1/14, F21V 29/00, F21V 5/00, F21V 7/00, F21Y 101/02, F21S 8/10

(54) **MULTIFUNKTIONS-KFZ-SCHEINWERFERMODUL INSBESONDERE FÜR DEN FRONTBEREICH EINES KRAFTFAHRZEUGS**
MULTI-FUNCTIONAL MOTOR VEHICLE HEADLIGHT MODULE, IN PARTICULAR FOR THE FRONT REGION OF A MOTOR VEHICLE
MODULE DE PHARE MULTIFONCTION POUR VEHICULE AUTOMOBILE, EN PARTICULIER POUR L'AVANT DU VEHICULE

(30) Priorität: 14.10.2005 DE 102005049685
(43) Veröffentlichungstag der Anmeldung: 25.06.2008
(73) Patentinhaber: OSRAM GmbH, 80807 München (DE)
(72) Erfinder: HOHL-ABICHEDID, Angela, Beverly, Massachusetts 01915 (US); REINERS, Thomas, 89429 Bachhagel (DE); VOLLMER, Ralf, 89522 Heidenheim (DE)
(86) Internationale Anmeldenummer: PCT/EP2006/067331
(87) Internationale Veröffentlichungsnummer: WO 2007/042552

(56) Entgegenhaltungen:
- EP-A1- 1 006 506
- WO-A2-2004/088200
- FR-A- 2 861 833
- GB-A- 2 412 724

## Beschreibung

Es wird ein Kfz-Scheinwerfermodul angegeben.

Das Kfz-Scheinwerfermodul eignet sich insbesondere für den Einsatz in einem Kfz-Scheinwerfergehäuse im Frontbereich eines Kraftfahrzeuges.

Die Druckschrift US 6,601,982 B2 beschreibt einen Kfz-Scheinwerfer.

Die WO 2004/088200 A2 offenbart einen Scheinwerfer mit einer Vielzahl von Scheinwerferelementen, die jeweils einen Halbleiterchip und eine Primäroptik umfassen.

Die GB 2 412 724 A offenbart einen LED-Fahrzeugscheinwerfer mit einem ersten LED-Modul und einem zweiten LED-Modul, das in Serie zum ersten LED-Modul geschaltet ist, wobei die Anzahl der LEDs im zweiten LED-Modul geringer als im ersten LED-Modul ist und die LEDs im zweiten LED-Modul Licht mit größerer Helligkeit erzeugen als die LEDs des ersten Moduls, wenn den LED-Modulen ein identischer Strom zugeführt wird.

Die FR 2 861 833 A offenbart einen Fahrzeugscheinwerfer mit einer ersten Leuchteinheit, die Halbleiterlichtquellen verwendet und zum Erzeugen des Abblendlichts dient, und mit einer zweiten Leuchteinheit, die eine Entladungslampe zum Erzeugen des Fernlichts verwendet.

Die EP 1 006 506 A1 offenbart ein optisches Display für Fahrzeuge mit LEDs, die in einer Matrix angeordnet sind und Schaltungsmittel, die als steuerbare Stromquelle und steuerbare Spannungsquelle wirken, so dass ein konstanter Strom für jede LED und die entsprechende Spannung bereitgestellt werden.

Eine zu lösende Aufgabe besteht darin, ein besonders kompaktes und vielseitig einsetzbares Kfz-Scheinwerfermodul anzugeben.

Gemäß zumindest einer Ausführungsform wird ein Kfz-Scheinwerfermodul angegeben, das wenigstens zwei Leuchteinheiten aufweist. Die unterschiedlichen Leuchteinheiten sind dabei für voneinander verschiedene Lichtfunktionen vorgesehen. So kann eine der Leuchteinheiten beispielsweise zur Erzeugung einer Fernlicht- oder fernlichtartigen Abstrahlcharakteristik geeignet sein. Die der Leuchteinheit zugeordnete Lichtfunktion ist dann die eines Fernlichts. Eine andere Leuchteinheit kann dazu geeignet sein, eine Abblendlicht- oder abblendlichtartige Abstrahlcharakteristik zu erzeugen. Die der Leuchteinheit zugeordnete Lichtfunktion ist dann die eines Abblendlichtes.

Ferner ist es möglich, dass eine Leuchteinheit für eine bestimmte, vorgegebene erste Lichtfunktion vorgesehen ist und sich durch Zuschalten einer weiteren Leuchteinheit des Kfz-Scheinwerfermoduls eine zweite Lichtfunktion ergibt. Die zweite Lichtfunktion ist dann durch eine Kombination der Abstrahlcharakteristika der beiden Leuchteinheiten gegeben.

Gemäß zumindest einer Ausführungsform weist jede der Leuchteinheiten zumindest einen Leuchtdiodenchip als Licht- oder Strahlungsquelle auf. Vorzugsweise weist jede Leuchteinheit eine Mehrzahl von Leuchtdiodenchips auf, die die Lichtquelle der Leuchteinheit bildet.

Gemäß zumindest einer Ausführungsform sind die Leuchteinheiten des Kfz-Scheinwerfermoduls an einem gemeinsamen Kühlkörper thermisch angeschlossen. Im Betrieb der Lichtquellen der Leuchteinheiten erzeugte Wärme wird vom Kühlkörper aufgenommen und von diesem an die Umgebung abgegeben.

Bevorzugt umfasst das Modul dabei einen einzigen Kühlkörper für alle Leuchteinheiten des Kfz-Scheinwerfermoduls. Der Kühlkörper ist - neben seiner Funktion als Wärmesenke - auch als gemeinsamer Träger für die Leuchteinheiten vorgesehen. Der Kühlkörper ist vorzugsweise zusätzlich ein Modulträger. Das bedeutet, auf dem Kühlkörper können weitere Bestandteile des Kfz-Scheinwerfermoduls wie beispielsweise optische Elemente befestigt sein. Verglichen mit den Leuchteinheiten des Kfz-Scheinwerfermoduls, weist der Kühlkörper vorzugsweise eine große Ausdehnung auf. Hinsichtlich Volumen und Gewicht stellt der Kühlkörper den Hauptbestandteil des Kfz-Scheinwerfermoduls dar.

Bei dem Kühlkörper kann es sich aber auch um ein Wärmeleitelement handeln, das geeignet ist, die von den Lichtquellen erzeugte Wärme an einen weiteren Kühlkörper abzuführen. Bei dem weiteren Kühlkörper handelt es sich dann zum Beispiel um einen gemeinsamen Kühlkörper für eine Mehrzahl von Kfz-Scheinwerfermodulen. Der weitere Kühlkörper kann auch durch die Karosserie eines Kraftfahrzeuges oder das Gehäuse eines Scheinwerfers gebildet sein.

Gemäß zumindest einer Ausführungsform weist das Kfz-Scheinwerfermodul ferner eine stromstabilisierende Elektronik - beispielsweise einen Stromregulator - zur Spannungsversorgung der Leuchteinheiten des Kfz-Scheinwerfermoduls auf. Vorzugsweise dient dabei ein einziger Stromregulator zur Spannungsversorgung für alle Leuchteinheiten des Moduls. Die stromstabilisierende Elektronik kann beispielsweise auf einem Träger für die Leuchteinheiten aufgebracht sein. Weiter ist es möglich, dass die stromstabilisierende Elektronik auf dem Kühlkörper aufgebracht oder in den Kühlkörper integriert ist.

Gemäß zumindest einer Ausführungsform des Kfz-Scheinwerfermoduls umfasst das Kfz-Scheinwerfermodul wenigstens zwei Leuchteinheiten, wobei jede der Leuchteinheiten zumindest einen Leuchtdiodenchip umfasst. Unterschiedliche Leuchteinheiten des Kfz-Scheinwerfermoduls sind für voneinander verschiedene Lichtfunktionen vorgesehen. Die Leuchteinheiten sind dabei auf einem gemeinsamen Kühlkörper aufgebracht. Ferner umfasst das Kfz-Scheinwerfermodul eine gemeinsame stromstabilisierende Elektronik zur Spannungsversorgung der Leuchteinheiten des Moduls.

Dem Kfz-Scheinwerfermodul liegt unter anderem die Idee zugrunde, dass durch die Integration mehrerer Leuchteinheiten auf einen einzigen Kühlkörper, der zugleich als Modulträger des gesamten Moduls vorgesehen sein kann, ein besonders kompaktes Kfz-Scheinwerfermodul ermöglicht ist. Da die unterschiedlichen Leuchteinheiten voneinander verschiedene Lichtfunktionen wahrnehmen, ist dieses kompakte Kfz-Scheinwerfermodul besonders vielseitig verwendbar. Ferner ermöglicht die kompakte Anordnung der Leuchteinheiten die Verwendung einer einzigen stromstabilisierenden Elektronik für alle Leuchteinheiten des Moduls. Dadurch ist zudem ein besonders kostengünstiges Kfz-Scheinwerfermodul ermöglicht, da zum Beispiel ein einziger Stromregulator für alle Leuchteinheiten des Moduls ausreichend ist. Das beschriebene Multifunktions-Scheinwerfermodul eignet sich insbesondere zur Verwendung anstelle von herkömmlichen Zwei-Wendel-Filamentlampen im Frontbereich eines Kraftfahrzeuges.

Ein Kfz-Scheinwerfer kann eine Mehrzahl solcher Module zur Lichterzeugung umfassen. Ferner ist es möglich, dass ein Kfz-Scheinwerfer ein solches Kfz-Scheinwerfermodul und weitere Elemente zur Lichterzeugung aufweist. So kann der Scheinwerfer neben dem beschriebenen Kfz-Scheinwerfermodul beispielsweise auch eine oder mehrere Gasentladungslampen zur Lichterzeugung umfassen.

Gemäß zumindest einer Ausführungsform des Kfz-Scheinwerfermoduls umfasst jede Leuchteinheit eine primäre Optik. Die primäre Optik ist jeweils geeignet, die von den Lichtquellen der Leuchteinheiten - vorzugsweise Leuchtdiodenchips - in Betrieb erzeugte elektromagnetische Strahlung derart zu formen, dass eine Abstrahlcharakteristik entsprechend der für die Leuchteinheit gewünschten Lichtfunktion eingestellt wird. Die Primäroptik ist dazu jeweils der Lichtquelle einer Leuchteinheit nachgeordnet. Mit anderen Worten ist die der Leuchteinheit zugeordnete Lichtfunktion hauptsächlich durch die primäre Optik bestimmt. Vorzugsweise weist jede Leuchteinheit genau eine primäre Optik auf.

Gemäß zumindest einer Ausführungsform des Kfz-Scheinwerfermoduls ist die primäre Optik zumindest einer der Leuchteinheiten zumindest stellenweise nach Art eines der folgenden optischen Grundelemente ausgebildet: Zusammengesetzter parabolischer Konzentrator (Compound Parabolic Concentrator - CPC), zusammengesetzter elliptischer Konzentrator (Compound Elliptic Concentrator - CEC), zusammengesetzter hyperbolischer Konzentrator (Compound Hyperbolic Concentrator - CHC). Das heißt, die primäre Optik weist reflektierende Seitenwände auf, die zumindest stellenweise nach Art eines dieser optischen Grundelemente geformt sind. Weiter kann die primäre Optik zumindest stellenweise nach Art einer Pyramidenstumpf- oder Kegelstumpfoptik geformt sein.

In all diesen Fällen ist die primäre Optik vorzugsweise derart ausgebildet, dass sie sich zur Lichtquelle der Leuchteinheit, das heißt, beispielsweise zu den Leuchtdiodenchips hin verjüngt. In Richtung einer Strahlungsaustrittsfläche der primären Optik nimmt dann die Querschnittsfläche der primären Optik zu. Durch Reflexionen von elektromagnetischer Strahlung an den Seitenwänden der primären Optik wird an der Strahlungsaustrittsfläche der primären Optik oder entfernt von der Strahlungsaustrittsfläche außerhalb der primären Optik eine vorgebbare Abstrahlcharakteristik der Leuchteinheit erzeugt. Eine Optimierung der Seitenwände der primären Optik zur Einstellung einer gewünschten, vorgebbaren Abstrahlcharakteristik kann beispielsweise unter Verwendung von Ray-Tracing Simulationen erfolgen.

Die primäre Optik kann in allen beschriebenen Ausgestaltungen als Hohlkörper ausgebildet sein, bei dem die der Lichtquelle der Leuchteinheit zugewandten Innenflächen der Seitenwände reflektierend beschichtet sind. Ferner ist es möglich, dass die primäre Optik als Vollkörper ausgebildet ist, der aus einem transparenten, dielektrischen Material geformt ist. Die Führung von elektromagnetischer Strahlung in der primären Optik findet in diesem Fall zumindest teilweise durch Totalreflexion statt. Für den Fall einer Vollkörper-Optik ist es insbesondere auch möglich, dass die Strahlungsaustrittsfläche der primären Optik linsenartig gewölbt oder strukturiert ist. Auf diese Weise erfolgt bei Lichtaustritt durch die Strahlungsaustrittsfläche eine weitere Strahlformung.

Bevorzugte Materialien zur Bildung der primären Optik sind beispielsweise PMMA, PMMI, PC oder Glas.

Gemäß zumindest einer Ausführungsform des Kfz-Scheinwerfermoduls weist die primäre Optik eine mikrostrukturierte Oberfläche auf. Das heißt, zumindest eine Strahlungsdurchtrittsfläche der primären Optik ist stellenweise mikrostrukturiert. Die Mikrostrukturen weisen bevorzugt eine Strukturgröße im Bereich der Wellenlänge der von den Leuchteinheiten erzeugten elektromagnetischen Strahlung auf. An den Mikrostrukturen findet daher vorzugsweise eine Beugung der durch die strukturierte Strahlungsdurchtrittsfläche tretenden elektromagnetischen Strahlung statt.

Zum Beispiel umfasst die primäre Optik einen Optikkörper, dessen Strahlungsaustrittsfläche nach Art einer asphärischen Linse gewölbt ist. Die Strahlungseintrittsfläche kann dann Mikrostrukturierungen aufweisen, die zum Beispiel geeignet sind, Farbfehler zu reduzieren.

Gemäß zumindest einer Ausführungsform des Kfz-Scheinwerfermoduls ist den Leuchteinheiten des Moduls eine gemeinsame sekundäre Optik nachgeordnet. Das heißt, das Modul weist eine einzige sekundäre Optik auf, die geeignet ist, die von den Leuchteinheiten erzeugte Abstrahlcharakteristik in das Fernfeld, das heißt beispielsweise auf eine Straße, auf der sich das Kraftfahrzeug mit dem Kfz-Scheinwerfermodul bewegt, zu projizieren.

Mit anderen Worten weist das hier beschriebene Kfz-Scheinwerfermodul für alle Leuchteinheiten eine gemeinsame, einzige Austrittsapertur auf. Das beschriebene Kfz-Scheinwerfermodul macht sich dabei unter anderem die Idee zunutze, dass durch die Verwendung einer einzigen Austrittsapertur für alle Leuchteinheiten des Scheinwerfermoduls ein besonders kompaktes Modul ermöglicht ist.

Die sekundäre Optik kann beispielsweise mit dem Kühlkörper mechanisch verbunden und an diesem befestigt sein. Da auch die Leuchteinheiten zumindest mittelbar auf dem Kühlkörper befestigt sind, ist auf diese Weise eine besonders genaue Justage von Leuchteinheit und nachgeordneter sekundärer Optik ermöglicht. Die Leuchteinheiten und die sekundäre Optik des Kfz-Scheinwerfermoduls müssen in diesem Fall lediglich relativ zum Kühlkörper justiert werden. Dies kann zum Bespiel mittels Passstiften und korrespondierenden Passbohrungen geschehen. Nach Aufbringen auf den Kühlkörper befinden sich die Elemente des Kfz-Scheinwerfermoduls dann schon in der gewünschten Lage zueinander.

Die sekundäre Optik umfasst gemäß zumindest einer Ausführungsform des hier beschriebenen Kfz-Scheinwerfermoduls ein reflektives optisches Element. Beispielsweise handelt es sich bei der sekundären Optik um eine Reflektoroptik. Im Falle einer Reflektoroptik können die Leuchteinheiten des Moduls optisch voneinander entkoppelt sein, derart, dass sie in unterschiedliche von der Reflektoroptik erfasste Raumwinkel abstrahlen. Dies ist beispielsweise durch einen Spiegel oder eine andere reflektive Vorrichtung möglich, die zwischen jeweils zwei Leuchteinheiten des Moduls angebracht ist. Die optische Entkopplung kann aber auch durch eine beispielsweise total reflektierende primäre Optik erreicht sein.

Die Reflektoroptik kann derart gestaltet sein, dass ein erstes Strahlungsbündel beispielsweise einer ersten Leuchteinheit als Abblendlicht benutzt wird. Ein weiteres Strahlenbündel einer zweiten Leuchteinheit strahlt zum Beispiel durch die gegen den Fokalpunkt der Reflektoroptik versetzte Position in den oberen Halbraum ab und dient als Fernlicht.

Gemäß zumindest einer Ausführungsform des Kfz-Scheinwerfermoduls umfasst die sekundäre Optik eine Projektionsoptik. Zum Beispiel ist die sekundäre Optik dann durch eine Projektionslinse gegeben. Die Projektionslinse ist den Leuchteinheiten in Hauptabstrahlrichtung der Leuchteinheiten nachgeordnet. Dabei sind die Primäroptiken des Kfz-Scheinwerfermoduls vorzugsweise derart im Modul angebracht, dass ihre Strahlungsaustrittsflächen bündig zusammenlaufen. Die an oder in Hauptabstrahlrichtung nach den Strahlungsaustrittsflächen erzeugte Abstrahlcharakteristik wird von der Projektionslinse dann in das Fernfeld abgebildet. Umfasst das Kfz-Scheinwerfermodul beispielsweise zwei Leuchteinheiten, dann schneidet eine Trennlinie in der Mitte zwischen den beiden Strahlungsaustrittsflächen der Leuchteinheiten die optische Achse der Projektionslinse bevorzugt in einem rechten Winkel. Auf diese Weise kann die Projektion der Abstrahlcharakteristik einer Leuchteinheit im Fernfeld unterhalb und die Projektion der Abstrahlcharakteristik der anderen Leuchteinheit im Fernfeld oberhalb des Horizonts zum Liegen kommen. Auf diese Weise sind beispielsweise ein Abblendlicht und ein Fernlicht durch ein einziges Kfz-Scheinwerfermodul mit einer einzigen Projektionslinse realisiert. Für Abblendlicht und Fernlicht wird bevorzugt eine gemeinsame Projektionslinse genutzt. Das heißt, eine einzige Austrittsapertur wird für zwei Lichtfunktionen verwendet.

Gemäß zumindest einer Ausführungsform des Kfz-Scheinwerfermoduls sind die Leuchtdiodenchips der Leuchteinheiten auf einem gemeinsamen Träger aufgebracht. Dabei ist es möglich, dass alle Leuchteinheiten jeweils einen separaten, eigenen Träger aufweisen oder dass alle Leuchteinheiten des Moduls auf einen einzigen gemeinsamen Träger zusammengefasst sind. Der oder die Träger sind vorzugsweise durch Leiterplatten gebildet, die Leiterbahnen und Kontaktstellen zur elektrischen Kontaktierungder Leuchtdiodenchips umfassen. Dabei ist es möglich, dass die Leuchtdiodenchips getrennt voneinander ansteuerbar sind. Es ist aber auch möglich, dass mehrere Leuchtdiodenchips in Reihe zueinander geschaltet sind und nur gleichzeitig elektromagnetische Strahlung erzeugen können Die Träger können ferner beispielsweise Vorrichtungen zum Schutz der Leuchtdiodenchips gegen elektrostatische Spannungspulse (Electro Static Discharge - ESD) umfassen. Ferner ist es möglich, dass sich die stromstabilisierende Elektronik des Kfz-Scheinwerfermoduls auf einem der Träger für die Leuchteinheiten befindet.

Bei dem Träger handelt es sich zum Beispiel um eine Keramik, die eine besonders gute Wärmeleitfähigkeit aufweist. Der Träger kann auf eine Metallkernplatine oder direkt auf den Kühlkörper aufgebracht sein. Die Metallkernplatine enthält bevorzugt ein besonders gut wärmeleitendes Material wie zum Beispiel Aluminium oder Kupfer. Die Metallkernplatine ist dann vorzugsweise derart auf den Kühlkörper aufgebracht, dass über die den Leuchtdiodenchips abgewandte Unterseite des Trägers Wärme großflächig an den Kühlkörper abgegeben werden kann.

Gemäß zumindest einer Ausführungsform des Kfz-Scheinwerfermoduls sind die Leuchteinheiten des Moduls zueinander in Reihe geschaltet. Weiter ist dann jeder Leuchteinheit des Moduls eine Schalteinheit parallel geschaltet. Bei geschlossener Schalteinheit wird die zur Schalteinheit parallel geschaltete Leuchteinheit überbrückt, so dass zumindest ein Großteil des Stroms nicht durch den Zweig fließt, in dem sich die Leuchteinheit befindet. Auf diese Weise wird die Leuchteinheit bei geschlossenem Schalter nicht bestromt. Die in Reihe geschalteten Leuchteinheiten sind mit einer gemeinsamen stromstabilisierenden Elektronik - beispielsweise einem Stromregulator - zur Spannungsversorgung verbunden. Die Schalteinrichtung kann beispielsweise einen Schalttransistor umfassen.

Gemäß zumindest einer Ausführungsform des Kfz-Scheinwerfermoduls ist zumindest eine Leuchteinhe it für eine Abblendlicht-Lichtfunktion vorgesehen. Das heißt, die von dieser Leuchteinheit erzeugte Abstrahlcharakteristik ist eine abblendlichtartige Abstrahlcharakteristik. Vorliegend wird als abblendlichtartige Abstrahlcharakteristik beispielsweise eine Abstrahlcharakteristik verstanden, die unter die Vorgaben der UNECE-Regeln 98, 112 und/oder §571.108 FMVSS für Abblendlicht fällt.

Gemäß zumindest einer Ausführungsform des Kfz-Scheinwerfermoduls ist zumindest eine Leuchteinheit für eine Fernlicht-Lichtfunktion vorgesehen. Das bedeutet, die von dieser Leuchteinheit erzeugte Abstrahlcharakteristik ist eine fernlichtartige Abstrahlcharakteristik. Vorliegend wird als fernlichtartige Abstrahlcharakteristik beispielsweise eine Abstrahlcharakteristik verstanden, die unter die Vorgaben der UNECE-Regeln 98, 112 und/oder §571.108 FMVSS für Fernlicht fällt.

Gemäß zumindest einer Ausführungsform des Kfz-Scheinwerfermoduls ist zumindest eine Leuchteinheit für eine Kurvenlicht-Lichtfunktion vorgesehen. Das heißt, die von dieser Leuchteinheit erzeugte Abstrahlcharakteristik weist eine kurvenlichtartige Abstrahlcharakteristik auf. Vorliegend wird als kurvenlichtartige Abstrahlcharakteristik beispielsweise eine Abstrahlchrakteristik verstanden, die unter die Vorgaben der UNECE-Regeln 98, 112 und/oder §571.108 FMVSS für Kurvenlicht fällt.

Gemäß zumindest einer Ausführungsform des Kfz-Scheinwerfermoduls ist zumindest eine Leuchteinheit für eine

Positionslicht-Lichtfunktion vorgesehen. Das heißt, die von dieser Leuchteinheit erzeugte Abstrahlcharakteristik weist eine positionslichtartige Abstrahlcharakteristik auf. Vorliegend wird als positionslichtartige Abstrahlcharakteristik beispielsweise eine Abstrahlcharakteristik verstanden, die unter die Vorgaben der UNECE-Regel 7 für Positionslicht fällt.

Gemäß zumindest einer Ausführungsform weist das Kfz-Scheinwerfermodul wenigstens zwei Leuchteinheiten auf, wobei jede Leuchteinheit für eine jeweils andere der beschriebenen Lichtfunktionen vorgesehen ist. Das Kfz-Scheinwerfermodul kann dabei Leuchteinheiten für alle der hier beschriebenen Lichtfunktionen umfassen. Weiter ist es möglich, dass sich bestimmte Lichtfunktionen durch Kombination der Abstrahlcharakteristik mehrerer - beispielsweise zweier Leuchteinheiten - ergeben.

Gemäß zumindest einer Ausführungsform des Kfz-Scheinwerfermoduls umfasst zumindest eine der Leuchteinheiten wenigstens einen Leuchtdiodenchip, der geeignet ist, elektromagnetische Strahlung mit einem Emissionsmaximum im nahen Infrarotbereich zu erzeugen. Dabei wird der rötliche Farbeindruck der vom Infrarotleuchtdiodenchip erzeugten elektromagnetischen Strahlung durch das weiße Licht der übrigen Leuchtdiodenchips der Leuchteinheit oder durch das weiße Licht der anderen Leuchteinheit überstrahlt. Der Rotlichtanteil kann dabei auch zur Erhöhung des Farbwiedergabewertes des beispielsweise mittels Mischen von blauem und gelbem Licht erzeugten weißen Lichts der Leuchteinheiten dienen.

Der infrarote Anteil der vom infraroten Leuchtdiodenchip erzeugten elektromagnetischen Strahlung dient zur Ausleuchtung des Raumes vor dem Kraftfahrzeug und kann zusammen mit einer Nachtsichtvorrichtung für den Fahrer des Kraftfahrzeuges sichtbar gemacht werden. Dazu kann sich beispielsweise ein Detektorchip, der im Infrarotbereich eine besonders hohe Empfindlichkeit aufweist, im Kfz-Scheinwerfermodul befinden. Der Detektor ist beispielsweise auf den Träger einer Leuchteinheit oder dem Kühlkörper aufgebracht. Es ist aber auch möglich, dass sich der Detektor außerhalb des Kfz-Scheinwerfermoduls an anderer Stelle im Frontbereich des Kraftfahrzeuges befindet.

Im Folgenden wird das hier beschriebene Kfz-Scheinwerferfmodul anhand von Ausführungsbeispielen und den dazugehörigen Figuren näher beschrieben. Gleiche oder gleich wirkende Bestandteile der Figuren sind dabei mit den gleichen Bezugszeichen versehen. Die dargestellten Bestandteile, sowie die Größenverhältnisse der Bestandteile untereinander sind nicht als maßstabsgerecht anzusehen. Vielmehr sind einige Details der Figuren zum besseren Verständnis übertrieben groß dargestellt.
- Figur 1A: zeigt eine schematische Schnittdarstellung des hier beschriebenen Kfz-Scheinwerfermoduls gemäß einem ersten Ausführungsbeispiel,
- Figur 1B: zeigt eine schematische Aufsicht auf ein Kfz-Scheinwerfermodul gemäß des ersten Ausführungsbeispiels,
- Figur 2: zeigt eine schematische Perspektivdarstellung eines Kfz-Scheinwerfermoduls gemäß eines zweiten Ausführungsbeispiels,
- Figur 3: zeigt schematisch eine beispielhafte Beschaltung der Leuchteinheiten gemäß eines dritten Ausführungsbeispiels des hier beschriebenen Kfz-Scheinwerfermoduls,
- Figur 4: zeigt eine schematische Perspektivdarstellung einer Leuchteinheit für ein viertes Ausführungsbeispiel des hier beschriebenen Kfz-Scheinwerfermoduls,
- Figur 5: zeigt eine schematische Schnittdarstellung des hier beschriebenen Kfz-Scheinwerfermoduls gemäß einem fünften Ausführungsbeispiel.

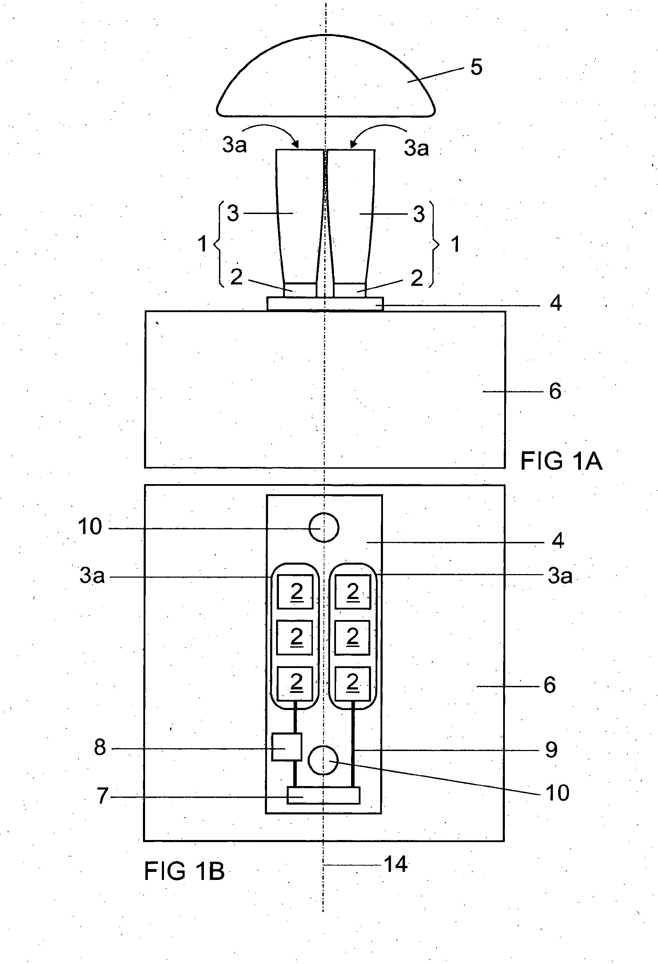

Figur 1A zeigt eine schematische Schnittdarstellung des Kfz-Scheinwerfermoduls gemäß einem ersten Ausführungsbeispiel. Figur 1B zeigt die dazugehörige Aufsicht auf das Kfz-Scheinwerfermodul.

Das hier gezeigte Kfz-Scheinwerfermodul weist zwei Leuchteinheiten 1 auf. Eine der Leuchteinheiten ist beispielsweise zur Erzeugung einer abblendlichtartigen Abstrahlcharakteristik geeignet. Die andere Leuchteinheit 1 ist dann geeignet, eine fernlichtartige Abstrahlcharakteristik zu erzeugen.

Die Leuchteinheiten 1 umfassen jeweils Leuchtdiodenchips 2 und eine Primäroptik 3. Die Leuchtdiodenchips 2 der beiden Leuchteinheiten 1 sind auf einem gemeinsamen Träger 4 aufgebracht. Bei den Leuchtdiodenchips 2 handelt es sich vorzugsweise um Leuchtdiodenchips in so genannter Dünnfilmbauweise.

Das heißt, wenigstens ein Leuchtdiodenchip 2 weist eine Lichtauskoppelfläche auf, durch die ein Großteil der vom Leuchtdiodenchip 2 emittierten elektromagnetischen Strahlung ausgekoppelt wird. Besonders bevorzugt tritt die gesamte vom Leuchtdiodenchip 2 emittierte Strahlung.durch die Lichtauskoppelfläche aus. Die Lichtauskoppelfläche ist beispielsweise durch einen Teil der Oberfläche des Leuchtdiodenchips 2 gegeben. Bevorzugt ist die Lichtauskoppelfläche durch eine Hauptfläche des Leuchtdiodenchips 2 gegeben, die beispielsweise parallel zu einer Epitaxieschichtenfolge des Leuchtdiodenchips 2 angeordnet ist, welche geeignet ist, elektromagnetische Strahlung zu erzeugen. Das heißt; die in den Leuchtdiodenchips erzeugte elektromagnetische Strahlung tritt überwiegend oder ausschließlich durch die dem Träger 4 abgewandte Oberseite des Leuchtdiodenchips 2 aus.

Dazu kann die Epitaxieschichtenfolge beispielsweise einen pn-Übergang, eine Doppelheterostruktur, eine Einfach-Quantentopfstruktur oder eine Mehrfach-Quantentopfstruktur (MQW) aufweisen. Die Bezeichnung Quantentopfstruktur kann jegliche Struktur umfassen, bei der Ladungsträger durch Einschluss ("confinement") eine Quantisierung ihrer Energiezustände erfahren. Insbesondere beinhaltet die Bezeichnung Quantentopfstruktur keine Angabe über die Dimensionalität der Quantisierung. Sie umfasst somit unter Anderem Quantentröge, Quantendrähte und Quantenpunkte und jede Kombination dieser Strukturen.

Bevorzugt handelt es sich bei dem Leuchtdiodenchip 2 um einen Leuchtdiodenchip bei dem das Aufwachssubstrat zumindest teilweise entfernt ist und auf dessen dem ursprünglichen Aufwachssubstrat abgewandte Oberfläche ein Trägerelement aufgebracht ist.

Das Trägerelement kann, verglichen mit einem Aufwachssubstrat, relativ frei gewählt werden. Bevorzugt wird ein Trägerelement gewählt, das hinsichtlich seines Temperaturausdehnungskoeffizienten besonders gut an die strahlungserzeugende Epitaxieschichtenfolge angepasst ist. Weiter kann das Trägerelement ein Material enthalten, das besonders gut Wärme leitend ist. Auf diese Weise wird die im Betrieb vom Leuchtdiodenchip 2 erzeugte Wärme besonders effizient an den Träger 4 abgeführt.

Solche, durch das Entfernen des Aufwachssubstrats hergestellten Leuchtdiodenchips 2, werden oftmals als Dünnfilmleuchtdiodenchips bezeichnet und zeichnen sich bevorzugt durch zumindest eines der folgenden Merkmale aus:
- An einer zum Trägerelement hingewandten ersten Hauptfläche der strahlungserzeugenden Epitaxieschichtenfolge ist eine reflektierende Schicht oder Schichtenfolge aufgebracht oder ausgebildet, die zumindest einen Teil der in der Epitaxieschichtenfolge erzeugten elektromagnetischen Strahlung in diese zurückreflektiert.
- Die Epitaxieschichtenfolge weist bevorzugt eine Dicke von maximal 20 µm, besonders bevorzugt von maximal 10 µm auf.
- Weiter enthält die Epitaxieschichtenfolge bevorzugt mindestens eine Halbleiterschicht mit zumindest einer Fläche, die eine Durchmischungsstruktur aufweist. Im Idealfall führt diese Durchmischungsstruktur zu einer annähernd ergodischen Verteilung des Lichts in der Epitaxieschichtenfolge, d.h. sie weist ein möglichst ergodisch, stochastisches Streuverhalten auf.

Ein Grundprinzip eines Dünnfilmleuchtdiodenchips ist beispielsweise in der Druckschrift I. Schnitzer at al., Appl. Phys. Lett. 63(16), 18. Oktober 1993, Seiten 2174 bis 2176 beschrieben, deren Offenbarungsgehalt das Grundprinzip eines Dünnfilmleuchtdiodenchips betreffend hiermit durch Rückbezug aufgenommen wird.

Die Leuchtdiodenchips 2 der Leuchteinheit 1 basieren vorzugsweise auf einem Phosphid- oder Nitrid-Verbindungshalbleiter.

"Auf Nitrid-Verbindungshalbleitern basierend" bedeutet im vorliegenden Zusammenhang, dass die aktive Epitaxieschichtenfolge oder zumindest eine Schicht davon ein Nitrid-III-Verbindungshalbleitermaterial, vorzugsweise AlₙGaₘIn₁₋ₙ₋ₘN umfasst, wobei 0 ≤ n ≤ 1, 0 ≤ m ≤ 1 und n+m ≤ 1. Dabei muss dieses Material nicht zwingend eine mathematisch exakte Zusammensetzung nach obiger Formel aufweisen. Vielmehr kann es ein oder mehrere Dotierstoffe sowie zusätzliche Bestandteile aufweisen, die die charakteristischen physikalischen Eigenschaften des AlₙGaₘIn₁₋ₙ₋ₘN-Materials im Wesentlichen nicht ändern. Der Einfachheit halber beinhaltet obige Formel jedoch nur die wesentlichen Bestandteile des Kristallgitters (Al, Ga, In, N), auch wenn diese teilweise durch geringe Mengen weiterer Stoffe ersetzt sein können.

"Auf Phosphid-Verbindungshalbleitern basierend" bedeutet in diesem Zusammenhang, dass die aktive Epitaxieschichtenfolge oder zumindest eine Schicht davon vorzugsweise AlₙGaₘIn₁₋ₙ₋ₘP umfasst, wobei 0 ≤ n ≤ 1, 0 ≤ m ≤ 1 und n+m ≤ 1. Dabei muss dieses Material nicht zwingend eine mathematisch exakte Zusammensetzung nach obiger Formel aufweisen. Vielmehr kann es ein oder mehrere Dotierstoffe sowie zusätzliche Bestandteile aufweisen, die die physikalischen Eigenschaften des Materials im Wesentlichen nicht ändern. Der Einfachheit halber beinhaltet obige Formel jedoch nur die wesentlichen Bestandteile des Kristallgitters (A1, Ga, In, P), auch wenn diese teilweise durch geringe Mengen weiterer Stoffe ersetzt sein können.

Diese Materialien zeichnen sich durch vereinfacht erreichbare hohe interne Quanteneffizienzen aus und eignen sich für Strahlung vom ultravioletten (insbesondere Nitrid-basiertes Verbindungshalbleitermaterial) und den sichtbaren (insbesondere Phosphid-basierte Verbindungshalbleitermaterialien) Spektralbereich.

Die Leuchtdiodenchips 2 sind zum Beispiel geeignet, elektromagnetische Strahlung im blauen Spektralbereich zu erzeugen, die durch ein Wellenlängenkonversionsmaterial teilweise in elektromagnetische Strahlung im gelben Spektralbereich konvertiert wird. Auf diese Weise wird weißes Mischlicht erzeugt.

Besonders bevorzugt umfasst das Wellenlängenkonversionsmaterial dotierte Granate wie Ce- oder Tb-aktivierte Granate wie YAG:Ce, TAG:Ce, TbYAG:Ce. Beispiele für geeignete Wellenlängenkonversionsmaterialien sind in den Druckschriften WO 97/50132 A1, WO 98/12757 A1 und WO 01/08452 A1 angegeben, deren Offenbarungsgehalte insofern hiermit ausdrücklich durch Rückbezug aufgenommen werden.

Weiter kann zumindest einer der Leuchtdiodenchips zumindest einer der Leuchteinheiten 1 geeignet sein, elektromagnetische Strahlung im nahen infraroten Spektralbereich zu erzeugen. Dieser Leuchtdiodenchip 2 basiert dann vorzugsweise auf einem Arsenid-Verbindungshalbleitermaterial.

"Auf einem Arsenid-Verbindungshalbleitermaterial basierend" bedeutet in diesem Zusammenhang, dass die aktive Epitaxieschichtenfolge oder zumindest eine Schicht davon vorzugsweise AlₙGaₘIn₁₋ₙ₋ₘAs umfasst, wobei 0 ≤ n ≤ 1, 0 ≤ m ≤ 1 und n±m ≤ 1. Dabei muss dieses Material nicht zwingend eine mathematisch exakte Zusammensetzung nach obiger Formel aufweisen. Vielmehr kann es ein oder mehrere Dotierstoffe sowie zusätzliche Bestandteile aufweisen, die die physikalischen Eigenschaften des Materials im Wesentlichen nicht ändern. Der Einfachheit halber beinhaltet obige Formel jedoch nur die wesentlichen Bestandteile des Kristallgitters (Al, Ga, In, As), auch wenn diese teilweise durch geringe Mengen weiterer Stoffe ersetzt sein können.

Der Träger 4 umfasst ferner eine Kontaktstelle 7, über die die Leuchtdiodenchips 2 der Leuchteinheiten 1 elektrisch kontaktierbar sind. Ferner können über die Kontaktstelle 7 Schaltsignale von außerhalb des Kfz-Scheinwerfermoduls zu den Leuchteinheiten 1 gelangen.

Die Leuchtdiodenchips 2 sind mittels Leiterbahnen 9 kontaktiert. Beispielsweise auf dem Träger 4 kann auch eine stromstabilisierende Elektronik 8 angeordnet sein. Eine solche stromstabilisierende Elektronik 8 zur Spannungsversorgung der Leuchtdiodenchips 2 kann aber auch außerhalb des Trägers 4 beispielsweise auf dem Kühlkörper 6 angeordnet sein.

Den Leuchtdiodenchips 2 der Leuchteinheiten 1 ist pro Leuchteinheit jeweils eine primäre Optik 3 nachgeordnet. Die Strahlungsaustrittsflächen 3a der primären Optiken 3 der beiden Leuchteinheiten 1 können bündig zusammenlaufen. Bei den Primäroptiken 3 handelt es sich beispielsweise um zumindest stellenweise CPC-artig, CEC-artig, CHC-artig, pyramidenstumpfoptik-artig oder kegelstumpfoptik-artig ausgebildete reflektive optische Elemente, wie sie weiter oben beschrieben sind. Bevorzugt sind die primären Optiken 3 geeignet, eine bestimmte Abstrahlcharakteristik an der Strahlungsaustrittsfläche 3a oder in einem Abstand von den Strahlungsaustrittsflächen 3a zu erzeugen. Die Projektionslinse 5 projiziert die derart erzeugte Abstrahlcharakteristik der Leuchteinheiten 1 dann in das Fernfeld.

Der Träger 4 ist beispielsweise mittels Passstiften oder Schrauben 10 auf einen Kühlkörper 6 aufgebracht. Die von den Leuchtdiodenchips 2 im Betrieb erzeugte Wärme wird durch den Träger 4, der dazu beispielsweise ein gut Wärme leitendes Material wie Kupfer oder Aluminium enthält, an den Kühlkörper 6 abgegeben.

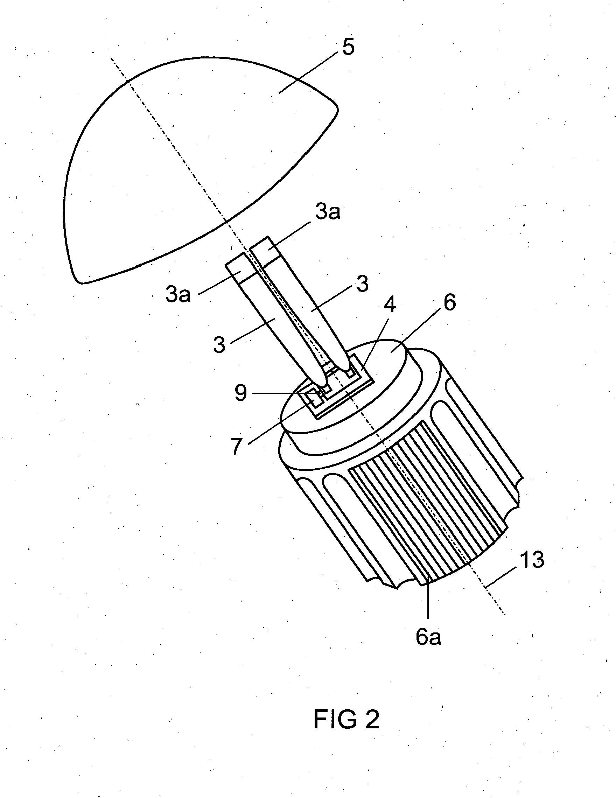

Figur 2 zeigt eine schematische Perspektivdarstellung eines zweiten Ausführungsbeispiels des hier beschriebenen Kfz-Scheinwerfermoduls. Wie der Figur 2 zu entnehmen ist, verläuft die Trennachse 14 (siehe dazu Figuren 1A, 1B) zwischen den Strahlungsaustrittsflächen 3a der beiden Leuchteinheiten 1 senkrecht zur optischen Achse 13 der Projektionslinse 5. Auf diese Weise kommt bei entsprechender Orientierung des Kfz-Scheinwerfermoduls in einem Kfz-Frontscheinwerfer die Abbildung der Abstrahlcharakteristik der ersten Leuchteinheit 1 unterhalb und die

Abstrahlcharakteristik der zweiten Leuchteinheit 1 oberhalb des Horizonts zu liegen. Auf diese Weise kann mit einem einzigen Kfz-Scheinwerfermodul eine abblendlichtartige und eine fernlichtartige Abstrahlcharakteristik in das Fernfeld projiziert werden. Beide Leuchteinheiten 1 nutzen dabei die gleiche Austrittsapertur der Projektionslinse 5.

Der Kühlkörper 6 ist im Ausführungsbeispiel der Figur 2 nach Art eines Zylinders ausgebildet. Diese Form eignet sich besonders gut für einen einfachen Einbau des Moduls in das Frontscheinwerfergehäuse eines Kraftfahrzeuges. Zur verbesserten Abgabe der von den Leuchtdiodenchips 2 im Betrieb erzeugten Wärme an die Umgebung weist der Kühlkörper 6 im Ausführungsbeispiel der Figur 2 zusätzlich Kühlrippen 6a auf.

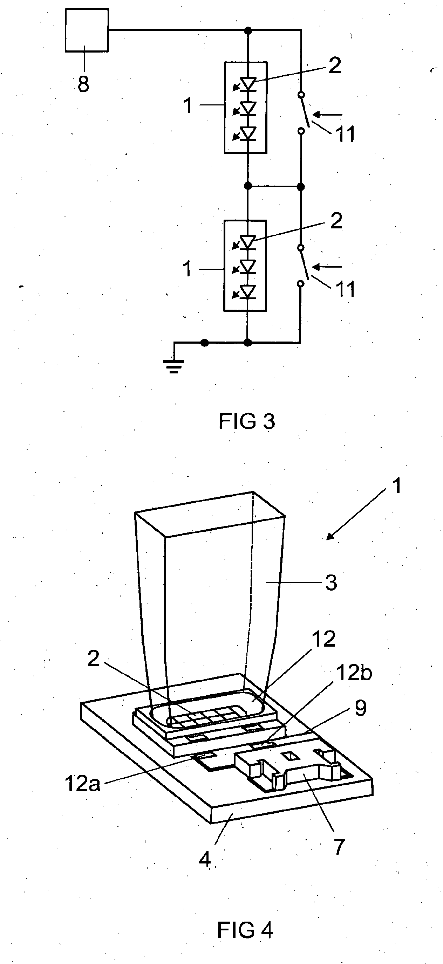

Figur 3 zeigt eine mögliche Beschaltung der Leuchteinheiten 1 für ein weiteres Ausführungsbeispiel des hier beschriebenen Kfz-Scheinwerfermoduls. Diese Beschaltung kann in allen hier beschriebenen Ausführungsbeispielen des Kfz-Scheinwerfermoduls Verwendung finden. Die Spannungsversorgung der Leuchteinheiten 1 findet über eine gemeinsame stromstabilisierende Elektronik 8, beispielsweise einen Stromregulator, statt. Die Leuchteinheiten 1 sind zueinander in Reihe geschaltet. An jeder Leuchteinheit 1 liegt parallel ein Schalttransistor 11 an. Bei geschlossenem Schalttransistor 11 ist die zum Schalttransistor 11 parallel geschaltete Leuchteinheit kurzgeschlossen, sodass sie nicht aktiv ist. Dabei kann im Parallelzweig, das heißt im Zweig des Schalttransistors 11, optional auch ein Widerstand zur Stromreduktion angeordnet sein. Die beschriebene Beschaltung der Leuchteinheiten 1 ermöglicht es vorteilhaft, die Leuchteinheiten 1 mit nur einem Stromregulator zu versehen, sodass nicht jede Leuchteinheit mit einem separaten Stromregulator angesteuert werden muss. Auf diese Weise ist ein besonders kostengünstiges Kfz-Scheinwerfermodul ermöglicht.

Figur 4 zeigt eine schematische Perspektivdarstellung einer Leuchteinheit 1, wie sie zum Beispiel in einem vierten Ausführungsbeispiel des hier beschriebenen Kfz-Scheinwerfermoduls zum Einsatz kommen kann. In diesem Ausführungsbeispiel ist jede Leuchteinheit 1 auf einem separaten Träger 4 angeordnet. Die in Figur 4 gezeigte Leuchteinheit 1 auf dem Träger 4 umfasst beispielsweise fünf Leuchtdiodenchips 2. Bei den Leuchtdiodenchips 2 handelt es sich vorzugsweise um wie oben beschriebene Dünnfilmleuchtdiodenchips mit einer Lichtausbeute von jeweils wenigstens 20 lm/W. Bevorzugt sind die Leuchtdiodenchips 2 geeignet, Licht im blauen Spektralbereich zu erzeugen. Dazu basieren die Leuchtdiodenchips 2 vorzugsweise auf einem Nitrid-verbindungshalbleitermaterial. Den Leuchtdiodenchips 2 ist ein Wellenlängenkonversionsmaterial nachgeordnet. Der wellenlängenkonvertierte Anteil der von den Leuchtdiodenchips 2 abgegebenen elektromagnetischen Strahlung mischt sich mit dem nicht konvertieften Anteil bevorzugt zu weißem Licht.

Die Leuchtdiodenchips 2 sind auf einem Träger zum Beispiel am Boden eines Gehäuses 12 angeordnet. Das Gehäuse 12 kann dazu aus einem keramischen Material wie Aluminiumnitrid bestehen. Bevorzugt weist das Gehäuse 12 Innenwände auf, die zumindest stellenweise reflektierend ausgebildet sind.

Die Leuchtdiodenchips 2 sind außerhalb des Gehäuses 12 an den Kontaktflächen 12a und 12b elektrisch kontaktierbar. Leiterbahnen 9 verbinden die Kontaktflächen 12a, 12b mit der Kontaktstelle 7 über die die Leuchteinheit 1 von außen kontaktierbar ist. Beispielsweise kann dadurch ein Anschluss der Leuchteinheit 1 an das Stromnetz des Kraftfahrzeugs erfolgen. Das Kfz-Scheinwerfermodul kann mehrere solcher Leuchteinheiten 1 mit jeweils einem Träger 4 aufweisen. Dabei ist jede Leuchteinheit 1 dann für eine von den anderen Leuchteinheiten verschiedene Lichtfunktion vorgesehen.

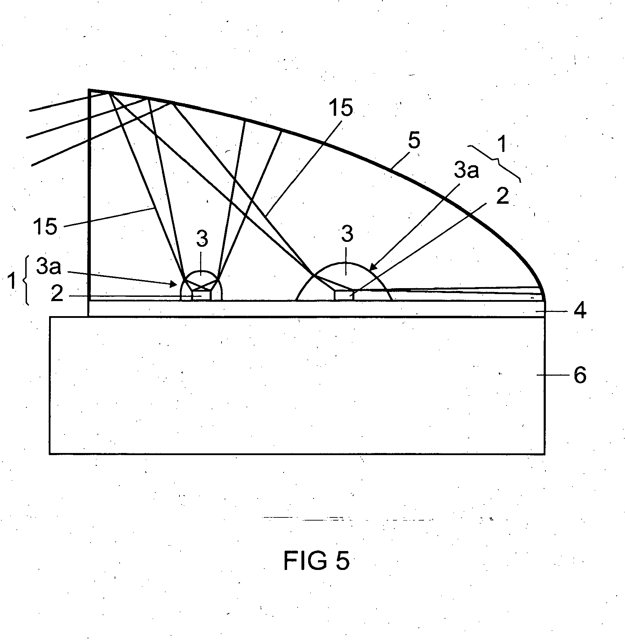

Figur 5 zeigt eine schematische Schnittdarstellung des hier beschriebenen Kfz-Scheinwerfermoduls gemäß einem fünften Ausführungsbeispiel.

Gemäß dem fünften Ausführungsbeispiel umfasst die sekundäre Optik 5 eine Reflektoroptik. Die Leuchteinheiten 1 sind in diesem Ausführungsbeispiel optisch voneinander entkoppelt. Die sekundäre Optik 5 ist dabei zum Beispiel als Hohlkörper ausgebildet, der auf seiner den Leuchtdiodenchips 2 zugewandten Oberfläche reflektierend ausgebildet ist. Zum Bespiel ist die Oberfläche reflektierend beschichtet.

Die Leuchtdiodenchips 2 können auf einem gemeinsamen Träger 4 angeordnet sein. Eine Strahlformung der von den Leuchtdiodenchiops 2 erzeugten elektromagnetischen Strahlung 15 findet zum einen durch an primären Optiken 3 statt. Zum anderen findet eine Strahlformung durch die reflektierende Oberfläche des Reflektors statt. Die Oberfläche des Reflektors kann dazu zum Beispiel nach Art eines der weiter oben beschriebenen nicht abbildenden optischen Konzentratoren geformt sein.

Die in Figur 5 links angeordnete Leuchteinheit 1 ist zum Beispiel zur Erzeugung einer Fernlichtverteilung geeignet.

Durch die primäre Optik 3 der links angeordneten Leuchteinheit 1 ist der Winkelbereich, in den Strahlung in den Reflektor abgegeben wird, auf einen bestimmten, vorgegebenen Winkelbereich eingeschränkt. Die in Figur 5 rechts angeordnete Leuchteinheit 1 ist beispielsweise zur Erzeugung einer, relativ zur Fernlichtverteilung, breiteren Abblendlichtverteilung geeignet. Die primäre Optik 3 der rechts angeordneten Leuchteinheit 1 ist dazu zum Beispiel derart ausgebildet, dass eine Abstrahlung in den gesamten Reflektor erfolgt. Bei den primären Optiken 3 des Ausführungsbeispiels gemäß der Figur 5 kann es sich zum Beispiel um ein Vergussmaterial handeln, dass die Leuchtdioderichips 2 formschlüssig umhüllt.

Die beiden Leuchteinheiten 1 unterscheiden sich durch den Winkelbereich, in dem sie Licht abstrahlen. Das heißt, die Leuchteinheiten 1 strahlen in unterschiedlich breite Winkelbereiche in den Reflektor ab. Dadurch ist es möglich, wenigstens zwei verschiedene Lichtfunktionen in einem einzigen Reflektor zu realisieren.

Die Erfindung ist nicht durch die Beschreibung anhand der Ausführungsbeispiele beschränkt. Vielmehr umfasst die Erfindung jedes neue Merkmal sowie jede Kombination von Merkmalen, was insbesondere jede Kombination von Merkmalen in den Patentansprüchen beinhaltet, auch wenn dieses Merkmal oder diese Kombination von Merkmalen selbst nicht explizit in den Patentansprüchen oder Ausführungsbeispielen angegeben sind.

### Bezugszeichenliste

- 1: Leuchteinheit
- 2: Leuchtdiodenchip
- 3: primäre Optik
- 3a: Strahlungsaustrittsfläche
- 4: Träger
- 5: sekundäre Optik
- 6: Kühlkörper
- 7: Kontaktstelle
- 8: stromstabilisierende Elektronik
- 9: Leiterbahn
- 10: Passstift
- 11: Schalteinheit
- 12: Gehäuse
- 13: optische Achse
- 14: Trennachse
- 15: elektromagnetische Strahlung

## Patentansprüche

1. Kfz-Scheinwerfermodul, mit
- wenigstens zwei Leuchteinheiten (1), wobei jede Leuchteinheit (1) zumindest einen Leuchtdiodenchip (2) und eine dem zumindest einen Leuchtdiodenchip (2) nachgeordnete primäre Optik (3) umfasst, und wobei unterschiedliche Leuchteinheiten (1) für voneinander verschiedene Lichtfunktionen vorgesehen sind, **dadurch gekennzeichnet, dass**
- ein gemeinsamer Kühlkörper (6) für die Leuchteinheiten (1) vorgesehen ist, mit dem die Leuchteinheiten (1) thermisch verbunden sind,
- allen Leuchteinheiten (1) des Kfz-Scheinwerfermoduls eine gemeinsame sekundäre Optik (5) nachgeordnet ist, und
- eine gemeinsame, Strom stabilisierende Elektronik (8) zur Spannungsversorgung der Leuchteinheiten (1) vorgesehen ist, wobei die Leuchteinheiten (1) zueinander in Reihe geschaltet sind und jeder Leuchteinheit (1) jeweils eine Schalteinheit (11) parallel geschaltet ist, derart, dass bei geschlossener Schalteinheit (8) die Leuchteinheit (1) nicht bestromt ist.

2. Kfz-Scheinwerfermodul gemäß dem vorherigen Anspruch bei dem die primäre Optik (3) zumindest stellenweise nach Art eines der folgenden optischen Grundelement ausgebildet ist: CPC-Optik, CEC-Optik, CHC-Optik, Pyramidenstumpfoptik, Kegelstumpfoptik.

3. Kfz-Scheinwerfermodul gemäß zumindest einem der vorherigen Ansprüche, bei dem die die primäre Optik (3) eine mikrostrukturierte Oberfläche aufweist.

4. Kfz-Scheinwerfermodul gemäß zumindest einem der vorherigen Ansprüche, bei dem die sekundäre Optik (5) ein reflektives optisches Element umfasst.

5. Kfz-Scheinwerfermodul gemäß zumindest einem der vorherigen Ansprüche, bei dem die sekundäre Optik (5) eine Projektionsoptik umfasst.

6. Kfz-Scheinwerfermodul gemäß zumindest einem der vorherigen Ansprüche, bei dem die Leuchtdiodenchips (2) der Leuchteinheiten (1) auf einer gemeinsame Leiterplatte (4) angeordnet sind.

7. Kfz-Scheinwerfermodul gemäß Anspruch 1, bei dem die Schalteinheit (11) einen Schalttransistor umfasst.

8. Kfz-Scheinwerfermodul gemäß zumindest einem der vorherigen Ansprüche, bei dem zumindest eine der Leuchteinheiten (1) für eine der folgenden Lichtfunktionen vorgesehen ist: Abblendlicht, Fernlicht, Kurvenlicht, Positionslicht.

9. Kfz-Scheinwerfermodul gemäß zumindest einem der vorherigen Ansprüche, bei dem zumindest eine Leuchteinheit (1) eine Leuchtdiode (2) umfasst, die geeignet ist, elektromagnetische Strahlung mit einem Emissionsmaximum im infraroten Spektralbereich zu erzeugen.

## Claims

1. Motor vehicle headlight module, with
- at least two luminous units (1), each luminous unit (1) comprising at least one light-emitting diode chip (2) and a primary optical unit (3) arranged downstream of the at least one light-emitting diode chip (2), and different luminous units (1) being provided for light functions which are different than one another,
**characterized in that**
- a common cooling body (6) is provided for the luminous units (1), to which the luminous units (1) are thermally connected,
- a common secondary optical unit (5) is arranged downstream of all of the luminous units (1) of the motor vehicle headlight module, and
- common current-stabilizing electronics (8) is provided for supplying voltage to the luminous units (1), the luminous units (1) being connected in series with one another, and each luminous unit (1) being connected in parallel with in each case one switching unit (11) in such a way that, when the switching unit (11) is closed, the luminous unit (1) is not energized.

2. Motor vehicle headlight module according to the preceding claim, in which the primary optical unit (3), at least in places, is in the form of one of the following optical basic elements: CPC optical unit, CEC optical unit, CHC optical unit, truncated pyramid optical unit, truncated cone optical unit.

3. Motor vehicle headlight module according to at least one of the preceding claims, in which the primary optical unit (3) has a microstructured surface.

4. Motor vehicle headlight module according to at least one of the preceding claims, in which the secondary optical unit (5) comprises a reflective optical element.

5. Motor vehicle headlight module according to at least one of the preceding claims, in which the secondary optical unit (5) comprises a projection optical unit.

6. Motor vehicle headlight module according to at least one of the preceding claims, in which the light-emitting diode chips (2) of the luminous units (1) are arranged on a common printed circuit board (4).

7. Motor vehicle headlight module according to Claim 1, in which the switching unit (11) comprises a switching transistor.

8. Motor vehicle headlight module according to at least one of the preceding claims, in which at least one of the luminous units (1) is provided for one of the following light functions: lower beam, upper beam, cornering beam, position light.

9. Motor vehicle headlight module according to at least one of the preceding claims, in which at least one luminous unit (1) comprises a light-emitting diode chip (2) which is suitable for producing electromagnetic radiation with an emission maximum in the infrared spectral range.

## Revendications

1. Module de phare de véhicule automobile, comportant :
- au moins deux unités électroluminescentes (1), chaque unité électroluminescente (1) comprenant au moins une puce de diode électroluminescente (2) et une optique primaire (3) en aval de l'au moins une puce de diode électroluminescente (2), et des unités électroluminescentes différentes (1) étant prévues pour des fonctions lumineuses différentes les unes des autres, **caractérisé en ce que** :
- il est prévu un corps de refroidissement commun (6) pour les unités électroluminescentes (1), auquel les unités électroluminescentes (1) sont reliées thermiquement ;
- une optique secondaire commune (5) est montée en aval de toutes les unités électroluminescentes (1) du module de phare de véhicule automobile ; et
- une électronique commune (8) de stabilisation du courant est prévue pour alimenter les unités électroluminescentes (1) en tension, les unités électroluminescentes (1) étant montées en série entre elles et respectivement une unité de commutation (11) étant montée en parallèle avec chaque unité électroluminescente (1) de manière telle que l'unité électroluminescente (1) n'est pas sous courant lorsque l'unité de commutation (8) est fermée.

2. Module de phare de véhicule automobile selon la revendication précédente, dans lequel l'optique primaire (3) est conçue au moins en partie à l'instar de l'un des éléments optiques de base suivants : optique CPC, optique CEC, optique CHC, optique en forme de pyramide tronquée, optique tronconique.

3. Module de phare de véhicule automobile selon au moins l'une des revendications précédentes, dans lequel l'optique primaire (3) présente une surface microstructurée.

4. Module de phare de véhicule automobile selon au moins l'une des revendications précédentes, dans lequel l'optique secondaire (5) comprend un élément optique réfléchissant.

5. Module de phare de véhicule automobile selon au moins l'une des revendications précédentes, dans lequel l'optique secondaire (5) comprend une optique de projection.

6. Module de phare de véhicule automobile selon au moins l'une des revendications précédentes, dans lequel les puces de diode électroluminescente (2) des unités électroluminescentes (1) sont agencées sur une carte de circuits imprimés commune (4).

7. Module de phare de véhicule automobile selon la revendication 1, dans lequel l'unité de commutation (11) comprend un transistor de commutation.

8. Module de phare de véhicule automobile selon au moins l'une des revendications précédentes, dans lequel au moins l'une des unités électroluminescentes (1) est prévue pour l'une des fonctions lumineuses suivantes : feu de croisement, feu de route, feu de virage, feu de position.

9. Module de phare de véhicule automobile selon au moins l'une des revendications précédentes, dans lequel au moins une unité électroluminescente (1) comprend une diode électroluminescente (2) qui est adaptée pour produire un rayonnement électromagnétique avec un maximum d'émission dans la plage spectrale infrarouge.
